**Europäisches Patentamt**

**European Patent Office**

**Office européen des brevets**

(19)

(11) Veröffentlichungsnummer: **0 186 766**
**B1**

(12) **EUROPÄISCHE PATENTSCHRIFT**

(45) Veröffentlichungstag der Patentschrift: **09.01.91**

(51) Int. Cl.⁵: **B 09 B 3/00**, B 65 F 3/14

(21) Anmeldenummer: **85114601.9**

(22) Anmeldetag: **16.11.85**

(54) **Anlage zur Verwertung von Müll.**

(30) Priorität: **29.11.84 CH 5702/84**

(43) Veröffentlichungstag der Anmeldung:
**09.07.86 Patentblatt 86/28**

(45) Bekanntmachung des Hinweises auf die
Patenterteilung:
**09.01.91 Patentblatt 91/02**

(84) Benannte Vertragsstaaten:
**AT BE DE FR GB IT LU NL SE**

(56) Entgegenhaltungen:
**EP-A-0 064 123**
**CH-A- 620 606**
**US-A-2 151 894**
**US-A-2 594 054**

(73) Patentinhaber: **Wiederkehr, Hans, Dr.**
**Ifangstrasse 107**
**CH-8153 Rümlang (CH)**

(72) Erfinder: **Wiederkehr, Hans, Dr.**
**Ifangstrasse 107**
**CH-8153 Rümlang (CH)**

(74) Vertreter: **EGLI-EUROPEAN PATENT**
**ATTORNEYS**
**Horneggstrasse 4**
**CH-8008 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Müllverwertungsanlage nach dem Oberbegriff des Patentanspruchs 1.

Es sind verschiedene Verfahren bekannt, nach denen der heute anfallende Müll verwertet wird. Das einfachste Verfahren besteht darin, den anfallenden Müll an geeigneten Stellen zu deponieren, wobei gegebenenfalls Transporte über grössere Strecken erforderlich sind. Dieses Verfahren ist jedoch heute praktisch nicht mehr anwendbar, da es für dicht bevölkerte Gebiete ökologisch nicht mehr vertretbar ist.

Ein weiteres Verfahren besteht in der Müllkompostierung. Hierbei muss der Müll auf grösseren Flächen ausgebreitet und während längerer Zeit gelagert werden. Die Müllkompostierungen haben sich jedoch aus technischen, ökologischen oder ökonomischen Gründen als Fehlschlag erwiesen. Sie sind aus einem besonderen Grunde problematisch, nämlich deshalb, weil es schwierig ist, die im Müll vorhandenen Schwermetalle unter Kontrolle zu halten. Wird dem zu kompostierenden Müll Klärschlamm hinzugefügt, besteht die Gefahr der Verbreitung von Salmonellen. Die Schwermetallrückstände einerseits und die Gefahr von Salmonellen andererseits haben dazu geführt, dass bezüglich der Abnahme von Müllkompost und Klärschlamm eine zunehmend ablehnende Haltung entstanden ist.

Ein weiteres Verfahren besteht in der Verbrennung des nassen Mülls, wie es heute in meist regionalen Müllverbrennungsanlagen durchgeführt wird. Die Kosten für den Antransport des Mülls, meist über grössere Strecken, und der Unterhalt der Müllverbrennungsanlagen führen dazu, dass dieses Verfahren verhältnismässig aufwendig und teuer ist. Es kommt noch hinzu, dass bei der Nassmüllverbrennung der kontinuierliche Betriebsablauf nicht in betriebswirtschaftlich wünschenswerter Weise gewährleistet werden kann. Auch ist der Ascheanfall gross und zudem führen die hohen Verbrennungstemperaturen zur Verflüchtigung der Schwermetall-Anteile. Dies führt wiederum zur Erstellung von Rauchgas-Filteranlagen, die ebenfalls kostenintensiv sowohl bezüglich ihrer Erstellung als auch bezüglich ihres Betriebes sind. Die Nassmüllverbrennung stellt demnach ebenfalls keine ideale Verwertung des Mülls dar.

Aus US-A-2 594 054 ist eine fahrbare Müllbehandlungsanlage bekannt bei welcher der von Metallen befreite Müll einem Zerkleinerungsrad zugeführt wird, von wo er durch eine aus zwei Druckrollen bestehende Presseinheit ausgepresst und zerkleinert wird. Eine weitergehende Behandlung des Mülls, beispielsweise durch Erwärmen zum Hygienisieren oder durch Brikettieren oder Pelletieren zum Kompaktieren auf kleinen Raum ist nicht möglich.

Aufgabe der vorliegenden Erfindung ist es, eine fahrbare Müllverwertungsanlage so weiterauszugestalten. dass eine über das Zerkleinern und Entfeuchten hinausgehende Behandlung ein getrocknetes, hygenisiertes oder kompaktiertes Endprodukt hergestellt werden kann.

Diese Aufgabe wird gemäss der Erfindung durch die Merkmale des Patentanspruches 1 gelöst.

Die Erfindung ist in der Zeichnung in zwei Ausführungsbei spielen dargestellt und nachfolgend beschrieben. Es zeigen:

Fig. 1 einen schematisch dargestellten Schnitt einer fahrbaren Müllverwertungsanlage nach der Erfindung,

Fig. 2 einen schematisch dargestellten Grundriss der Anordnung mehrerer Müllverwertungseinheiten,

Fig. 3 einen schematisch dargestellten Längsschnitt einer efidnungsgemässen Müllverwertungsanlage und

Fig. 4 einen Längsschnitt einer weiteren erfindungsgemässen Müllverwertungsanlage.

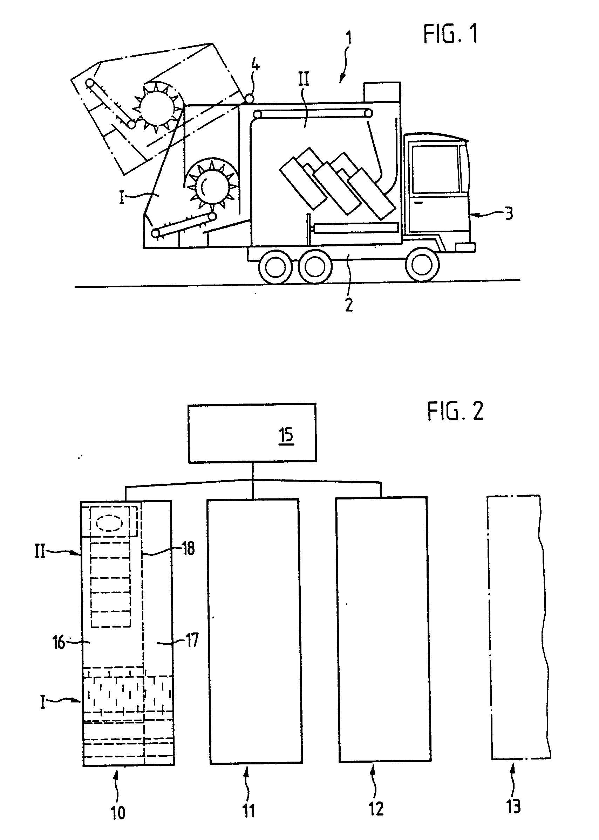

Die Erfindung geht von der Ueberlegung aus, dass die Verwertung von Müll nicht nur das Sammeln des Mülls umfassen soll, sondern auch seine Behandlung und Aufarbeitung, damit das erhaltene Produkt direkt oder nach einer Zwischenlagerung der weiteren Verwendung zugeführt werden kann. Zur Verringerung der Transportdistanzen werden Müllverwertungseinheiten in Form vollständiger Anlagen vorgesehen, die an Schwerpunkten des Müllanfalls aufgestellt werden oder die als fahrbare Einheiten eingesetzt werden können, siehe Fig. 1.

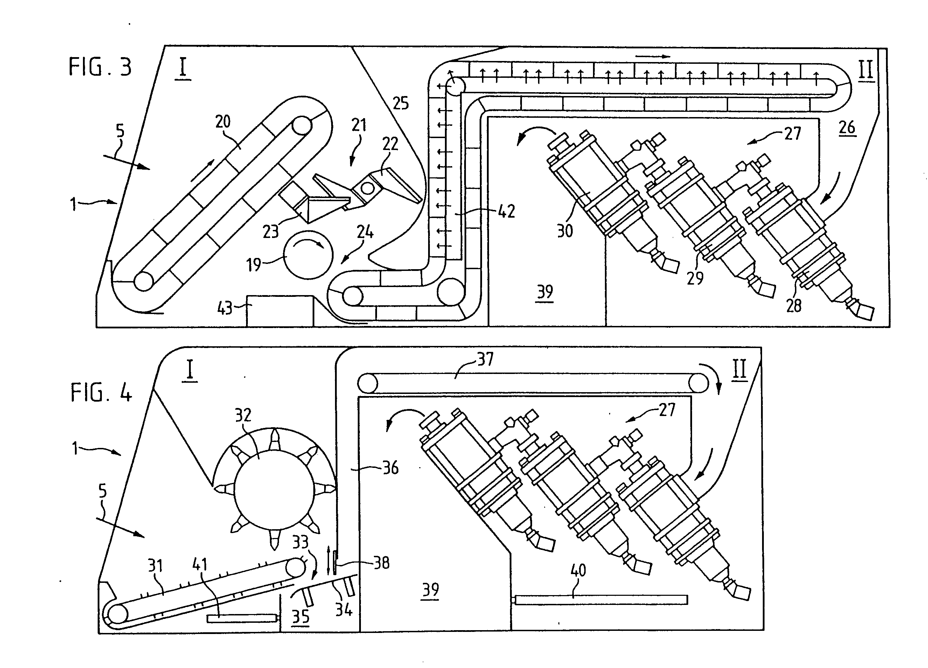

In Fig. 1 ist der wesentliche Aufbau einer Anlage als Müllverwertungseinheit 1 dargestellt. Die Müllverwertungseinheit 1 ist als Ganzes auf einem Chassis 2 eines Fahrzeuges 3 verladen und setzt sich aus zwei hintereinander angeordneten Räumen I, II zusammen, wobei der Raum I ein Vorbehandlungsraum ist, in dem der Müll zerkleinert und gegebenenfalls sortiert wird. Der Raum II stellt einen Nachbehandlungsraum dar, in welchem der zerkleinerte und gegebenenfalls sortierte Müll verschiedenen Behandlungen unterworfen werden kann, wobei in einem Arbeitsgang das vorbehandelte Material erwärmt, getrocknet, brikettiert oder pelletiert bzw. granuliert wird oder auch hygienisiert werden kann. Aus Fig. 1 ist weiter ersichtlich, dass der Raum I hochklappbar ist, indem er um eine auf der Oberseite der Anlage angeordnete horizontale Schwenkachse 4 schwenkbar ist. Dadurch wird eine leichte Zugänglichkeit zur Anlage geschaffen, so dass dadurch der Unterhalt erleichtert wird. Die in Fig. 1 dargestellte Müllverwertungseinheit entspricht derjenigen nach Fig. 4 und wird im Detail später behandelt.

In Fig. 2 ist eine Anlage mit mehreren Müllverwertungseinheiten 10, 11, 12, 13 dargestellt. Die Anordnung zu Gruppen von 3 Einheiten ist willkürlich, die Zahl der Einheiten richtet sich nach den jeweiligen örtlichen Bedürfnissen, Werden mehrere Müllverwertungseinheiten zusammengefasst, kann ein gemeinsamer motorischer Antrieb 15 vorgesehen werden, der über entsprechende mechanische hydraulische oder elektrische Antriebe die Müllverwertungseinheiten 10-13 antreibt.

In Fig. 2 ist die Müllverwertungseinheit 10 in besonderer Weise ausgebildet. Nachdem heute vermehrt angestrebt wird, bereits beim Verursacher des Mülls eine Trennung desselben in einzelne Komponenten durchzuführen, ist es zweckmässig, dass bei einer einzelnen Müllverwertungseinheit diese Komponenten getrennt aufgearbeitet werden können. Werden beispielsweise zwei Komponenten, pflanzlicher Müll einerseits und allgemeiner Müll andererseits, getrennt angeliefert, werden diese in getrennten Kammern 16, 17 verarbeitet, wobei jedoch jede Kammer einen eigenen Vorbehandlungs- und einen Nachbehandlungsraum I, II aufweisen muss. Auf diese Weise ist es möglich, auch eine fahrbare Müllverwertungseinheit nach Fig. 1 zu unterteilen, so dass für das Einsammeln von zwei oder mehr Komponenten beim Verursacher nur ein einziges Fahrzeug erforderlich ist. Die Ausbildung einer solchen Müllverwertungseinheit mit Kammern 16, 17 ist denkbar einfach: Es wird durch die Anlage eine oder mehrere Längswände 18 angeordnet. Hierbei können für die Vorbehandlungsräume I dieselben Vorrichtungen vorgesehen werden, die lediglich durch je eine Wand 18 getrennt sind. Bei dem Nachbehandlungsraum II werden für die Kammern 16, 17 verschiedene Vorrichtungen vorgesehen. Der allgemeine Müll, der beispielsweise in der Kammer 16 verarbeitet wird, benötigt eine Vorrichtung, die das Material in einem Arbeitsgang erwärmt, trocknet und brikettiert oder pelletiert bzw. granuliert, so dass es anschliessend als guter Brennstoff verwertbar ist. In der Kammer 17, in der beispielsweise der pflanzliche Müll verarbeitet wird, wird im Nachbehandlungsraum II eine Vorrichtung benötigt, die das Material nach der Zerkleinerung aufschliesst und gegebenenfalls hygienisiert, so dass es anschliessend kompostiert und zu Humusdünger aufgearbeitet oder als Gründünger verwendet werden kann. Eine Müllverwertungseinheit gemäss Fig. 1, jedoch mit zwei oder mehr Kammern 16, 17, kann die heutigen Mülltransportfahrzeuge ersetzen; der grosse Vorteil liegt jedoch darin, dass die Verdichtung und Aufbereitung des Materials auf dem Fahrzeug durchgeführt wird. Aus Fig. 3 ist der Innenausbau einer Müllverwertungseinheit 1 ersichtlich. Der Müll wird von der Hinterseite des Fahrzeuges aus Pfeilrichtung 5 in die Einheit eingebracht und fällt auf einen Schrägförderer 20, der den Müll hochfährt und in eine Zerkleinerungsvorrichtung 21 abwirft. Die Zerkleinerungsvorrichtung 21 weist eine rotierende Messerwelle 22 auf, die das Material gegen feste Messer 23 transportiert und dort zerkleinert. Das zerkleinerte Material fällt abwärts in eine Materialaustrittsöffnung 24 auf eine Materialtransportanlage 25, die das zerkleinerte, nach Passieren eines Magnetabscheiders von Metallteilen befreite Material aus dem Vorbehandlungsraum I in den Nachbehandlungsraum II zu einer Austrittsöffnung 26 einer Nachbehandlungsanlage 27 transportiert. Die Nachbehandlungsanlage 27 setzt sich aus mehreren Behandlungseinheiten 28, 29, 30 zusammen. Eine Behandlungseinheit dieser Art ist beispielsweise in dem Schutzrecht (BE 20 868) eingehend beschrieben. In diesem Schutzrecht sind die Behandlungseinheiten 28, 29, 30 Doppel-Schneckenpressen, die das zerkleinerte Material stufenweise verarbeiten. Für die Funktion dieser Einheiten wird ausdrücklich auf dieses Schutzrecht verwiesen.

Der Vorteil dieser Behandlungseinheiten 28, 29, 30 besteht darin, dass je nach der Art der Behandlung die Zahl dieser Einheiten unterschiedlich gewählt werden kann. Bei der in Fig. 2 dargestellten Müllverwertungseinheit 10 kann beispielsweise in der Kammer 17 nur eine Einheit eingesetzt werden. Die Anpassungsfähigkleit nach der Nachbehandlungsanlage 27 ist dadurch sehr gross. Diese wird dadurch noch erhöht, dass die Betriebsparameter — Drehzahl, Druck, Temperatur — in weiten Grenzen einstellbar und beeinflussbar sind.

Die Müllverwertungsanlage nach Fig. 4 weist wie diejenige nach Fig. 3 den Vorbehandlungsraum I und den Nachbehandlungsraum II auf. Der Nachbehandlungsraum II ist hierbei gleich ausgebildet wie derjenige der Anlage nach Fig. 3 und wird deshalb nicht mehr beschrieben. Der Vorbehandlungsraum I unterscheidet sich von demjenigen nach der Anlage nach Fig. 2 dadurch, dass ein Transportband 31 den aus Pfeilrichtung 5 eingeführten Müll unter einem Zerkleinerungsrotor 32 durchführt, der das ankommende Material zerkleinert und dasselbe gegen eine Austrittsöffnung 33 fördert, von wo es auf einen Rüttel- oder Magnettisch 34 fällt, auf welchem Schwerstoffe und Metalle ausgeschieden und in einen Bunker 35 abgeführt werden. Der Zerkleinerungsrotor 32 kann sowohl in der Höhe als auch in der Seite verstellt werden, um damit eine optimale Zerkleinerung zu erreichen. Das auf dem Rüttel- oder Magnettisch 34 sich sammelnde Material wird pneumatisch durch einen Kanal 36 nach oben auf ein Transportband 37 gefördert, das das Material der Nachbehandlungsanlage 27 im Nachbehandlungsraum II zuführt. Am Eintritt des Materials in den Kanal 36 ist ein Schieber 38 vorgesehen, mit dem entsprechend dem Materialanfall die Kanalöffnung eingestellt werden kann.

Das fertigbehandelte Material, das die Nachbehandlungsanlage 27 verlässt, wird in einem Bunker 39 abgelegt, von wo es mittels einer Austragvorrichtung 40 nach Bedarf ausgetragen werden kann. Eine gleiche Austragsvorrichtung 41 ist auch beim Bunker 35 vorgesehen, der das ausgeschiedene Material nach Badarf austrägt. Selbstverständlich sind auch bei der Anlage nach Fig. 3 Bunker 39, 40 entsprechende Austragsvorrichtungen (nicht dargestellt) angeordnet. Bei der Anlage nach Fig. 3 besteht zudem die Möglichkeit, bei der Materialtransportanlage 25 durch einen Kanal 42 Heissluft oder Verbrennungsgase zuzuführen, womit eine Vortrocknung des in der Nachbehandlungsanlage 27 zu verarbeitenden Materials erreicht wird.

In den beschriebenen Müllverwertungsanlagen werden die zugeführten Abfälle, Rohstoffe oder sonstige Materialien in einem Arbeitsgang vorbehandelt und dann nachbehandelt, worunter Erwärmung, Trocknung, Hygienisierung, Stabilisierung und Brikettisierung, Pelletisierung oder Granulierung verstanden werden. Hierbei kann den Anordferungen an das gewünschte Endprodukt in weitem Masse Rechnung getragen werden. Die regulierbaren Arbeitsdrücke und Temperaturen, in Verbindung mit wählbaren Programmabläufen., können einerseits beispielsweise die Feuchtigkeitsgrade der Endprodukte festgelegt und andererseits durch Druck Materialumwandlungen bewirkt werden. Die Nachbehandlung kann aber auch im Niedertemperaturbereich (60-90°C) durchgeführt werden, wenn eine schonende Behandlung des Endproduktes notwendig ist, beispielsweise bei der Herstellung von Futter-Pellets. Die Betriebstemperaturen können wahlweise so reguliert werden, dass eine Hygienisierung der Endprodukte gegeben ist. Da die notwendige Temperatur praktisch vollständig in der Nachbehandlungsanlage 27 erzeugt werden kann, ist eine solche Anlage praktisch unabhängig von der Zuführung von Fremdwärme. Soll zudem die Anlage ohne Zuleitung von Fremdenergie betrieben werden, kann die zum Betrieb erforderliche Energie durch Vergasung eines Teils des in der Nachbehandlungsanlage 27 produzierten Trockenproduktes in einer Pyrolyse-Anlage gewonnen und zum Betrieb eines Gasmotors als Antrieb verwendet werden.

Das beschriebene Verfahren und die dazugehörige Anlage eignet sich auch für die Bearbeitung anderer Materialien als Müll, z.B. Gras, Schilf, Zuckerrüben und anderer pflanzlicher sowie organischer Materialien, wofür die Anlage beliebig angepasst werden kann, wie dies in dem genannten älteren Schutzrecht beschrieben ist.

**Patentansprüche**

1. Müllverwertungsanlage auf einem Fahrzeug, dessen Raum mit einer Eintragvorrichtung (20, 31) und einer daran anschliessenden Zerkleinerungsvorrichtung (22, 23; 32, 20, 23; 32) ausgerüstet ist, deren Austrittöffnung auf eine Transporteinrichtung (25; 36, 37) gerichtet ist, der eine Pressvorrichtung (28, 29, 30) zugeordnet ist, durch die der vorbehandelte Müll in eine für die weitere Verwertung geeignete Form gebracht wird und an die ein Endproduktbehälter anschliesst, dadurch gekennzeichnet, dass der Raum in mindestens einen Vorbehandlungsraum I zur Zerkleinerung des Mülls und in mindestens einen Nachbehandlungsraum II mit einer Nachbehandlungsanlage (27) unterteilt ist, wobei die Nachbehandlungsanlage mit einer oder mehreren, in Serie geschalteten Schneckenpress-Einheiten (28, 29, 30) ausgerüstet ist, welche mit dem Vorbehandlungsraum durch eine einzige Fördereinrichtung (25, 36, 37) in Wirkungsverbindung steht, die zur Vortrocknung des Mülls als ein mit Heiss-Luft oder -Gas beaufschlagter Bandförderer (25) ausgebildet ist.

2. Müllverwertungsanlage nach Anspruch 1, dadurch gekennzeichnet, dass der Vorbehandlungsraum I und der Nachbehandlungsraum II in mindestens zwei nebeneinander liegende, durch eine Wand (20) getrennte Müllverwertungsanlagen unterteilt sind.

3. Müllverwertungsanlage nach Anspruch 1, dadurch gekennzeichnet, dass der Vorbehandlungsraum I bezüglich des Nachbehandlungsraums II um eine horizontale Drehachse schwenkbar ist.

**Revendications**

1. Installation pour utiliser des déchets qui est montée sur un véhicule dont l'intérieur comporte un dispositif d'introduction (20, 31) et un dispositif de broyage (22, 23; 32, 20, 23; 32) qui lui fait suite et dont l'ouverture d'évacuation est dirigée vers un dispositif de transport (25; 36, 37) auquel est associé un dispositif de compression (28, 29, 30) qui met les déchets prétraités sous une forme convenant à leur utilisation ultérieure et auquel se raccorde un récipient pour les produits finis, caractérisée en ce que l'enceinte est subdivisée en au moins une enceinte de prétraitement I pour le broyage des déchets et en au moins une enceinte de traitement ultérieur II comportant un dispositif de traitement ultérieur (27), ce dispositif de traitement ultérieur étant équipé d'une ou de plusieurs unités (28, 29, 30) qui comportent des presses à vis et sont montées en série et étant relié à l'enceinte de prétraitement par, un seul dispositif de transport (25, 36, 37) qui, pour assurer le séchage préalable des déchets, est constitué par un transporteur à bande (25) soumis à l'action d'air ou de gaz chaud.

2. Installation pour utiliser des déchets selon la revendication 1, caractérisée en ce que l'enceinte de prétraitement I et l'enceinte de traitement ultérieur II sont subdivisées en au moins deux installations d'utilisation des déchets situées l'une à coté de l'autre séparées par une paroi (20).

3. Installation pour utiliser les déchets selon la revendication 1, caractérisée en ce que l'enceinte de prétraitement I peut pivoter, par rapport à l'enceinte de traitement ultérieur II, autour d'un axe de rotation horizontal.

**Claims**

1. A refuse utilising plant on a vehicle, the chamber of which is provided with a feed device (20, 31) and a crushing device (22, 23; 32, 20, 23; 32) connected thereto, the outlet opening of which is directed to a transport device (25; 36, 37), to which is allocated a pressing device (28, 29, 30), through which the previously treated refuse is made into a form which is suitable for further utilisation and to which is connected an end product container, characterised in that the chamber is divided into at least one preliminary treatment chamber I for crushing the refuse and into at least one subsequent treatment chamber II with a subsequent treatment unit (27), wherein

EP 0 186 766 B1

the subsequent treatment unit is provided with one or several worm-extruder units (28, 29, 30) connected in series, which are in effective connection with the preliminary treatment chamber through a single conveying device (25, 36, 37), which is constructed, for preliminary drying of the refuse, as a conveyor belt (25), acted upon with hot air or hot gas.

2. A refuse utilising unit according to claim 1, characterised in that the preliminary treatment chamber I and the subsequent treatment chamber II are divided into at least two refuse utilising units, lying next to each other and separated by a wall (20).

3. A refuse utilising unit according to claim 1, characterised in that the preliminary treatment chamber I is able to be swivelled around a horizontal rotational axis, relative to the subsequent treatment chamber II.

FIG. 1

FIG. 2

FIG. 3

FIG. 4